# EUROPEAN PATENT SPECIFICATION

(11) **EP 3 680 486 B1**
(45) Date of publication and mention of the grant of the patent: **03.05.2023**
(21) Application number: 18854534.7
(22) Date of filing: 12.02.2018
(51) Int. Cl.: F04C 18/356, F04C 23/02, F04C 29/00

(54) **COMPRESSOR AND FABRICATION METHOD THEREFOR**
VERDICHTER UND HERSTELLUNGSVERFAHREN DAFÜR
COMPRESSEUR ET PROCÉDÉ DE FABRICATION POUR CELUI-CI

(30) Priority: 06.09.2017 CN 201710797161
(43) Date of publication of application: 15.07.2020
(73) Proprietor: Shanghai Highly Electrical Appliances Co., Ltd., Shanghai 201206 (CN)
(72) Inventor: HUANG, Bo, Shanghai 201206 (CN); ZHAO, Fengrong, Shanghai 201206 (CN); TANG, Yiqun, Shanghai 201206 (CN)
(74) Representative: Modiano, Gabriella Diana
(86) International application number: PCT/CN2018/076424
(87) International publication number: WO 2019/047478

(56) References cited:
- CN-A- 104 308 363
- CN-A- 105 556 122
- CN-U- 201 723 449
- CN-U- 206 035 810
- JP-A- H0 828 472
- JP-A- S59 122 786
- JP-A- 2007 291 972
- JP-A- 2017 031 934
- KR-A- 20060 087 259

## Description

### TECHNICAL FIELD

The present disclosure generally relates to refrigeration field, and more particularly, to rolling rotor compressor and assembling method thereof.

### BACKGROUND

In general, a hermetic compressor includes a motor, in an internal space of a sealed housing, for generating a driving force, and a compression member coupled to the motor for compressing refrigerant.

Hermetic compressors are classified, according to the compression mechanism for refrigerant, into different types including reciprocating compressors, scroll compressors, and rolling-rotor compressors. Reciprocating compressors, scroll compressors, and rolling-rotor compressors all use the rotational force of a motor.

In assembling most of the existing rolling-rotor compressors, the pump is firstly assembled (mainly including: crankshaft, piston, cylinder, upper and lower cylinder heads, blades, etc.), after the parts are processed. The pump is welded with the housing by three points / six points welding process.

However, this assembling method will cause welding deformation to affecting assembly accuracy and the air gap of the stator and rotor will be uneven which results in noise increments and poor performance.

The patent application JPS59122786A discloses a compressor including: an electric motor driven compressor main unit 14, constituted by successively providing an electric motor part 15 and a compressor part 16, is housed from the opening surface of a bottomed cylindrical case 12, and a laser beam is irradiated from said opening surface toward the inside as shown by an arrow head in the drawing, welding the compressor part 16 to be fixed to the case 12 and closing the opening surface of the case 12 by a cover unit 13.

The patent application JP2007291972A discloses a compressor including: a casing 10 and a lower main bearing 60. The casing 10 comprises a part to be welded on the inner surface of a body casing part 11. The lower main bearing 60 is housed in the casing 10, and comprises an outer peripheral part 61 facing the part to be welded.

The patent application CN104308363A discloses a compressor including: a compressor pump cylinder, a pump upper bracket, a top cover, a bottom cover and the motor are welded on the compressor shell by a laser welding device; the laser welding device comprises a welder and an aggregation lens arranged at the welder.

The patent application CN201723449U discloses a compressor including: an upper casing, a lower casing and a main casing, a motor drive mechanism including a stator and a rotator, and a compressing mechanism arranged above or below the motor drive mechanism, wherein the compressing mechanism comprises a cylinder, a piston and a slip sheet arranged in the cylinder, an eccentric crank shaft, and a long bearing and a short bearing for supporting the eccentric crank shaft; the space in the compressor is divided into a low-pressure cavity for pressure suction and a highpressure cavity for pressure exhaust by the long bearing and the short bearing; and the compressing mechanism is in girth welding with the main casing via the long bearing or the short bearing, grooves are formed annularly at the circumference of the welding joint of the main casing and the long/short bearing, and the cross sections of the grooves are triangular, quadrangular or arc-shaped.

Therefore, the present disclosure discloses a compressor according to appended claim 1 and an assembling method thereof, according to appended method claim 6. Further embodiments of the invention are defined in appended dependent claims 2-5 and 7.

### SUMMARY

In view of the problems in the existing technology, the purpose of the present disclosure is to provide a compressor and an assembling method thereof, which will reduce deformation, caused by welding, to affecting fabrication accuracy and ensure the air gap of the stator and rotor is even for reducing the noise and improving performance.

In one embodiment of the present disclosure, a compressor comprises a housing, a motor and a cylinder disposed in the housing, a crankshaft which is used to transmit rotation force of the motor to pistons of the cylinder for compressing refrigerant. An upper cylinder cover, a lower cylinder cover and the cylinder form a compressing space. The upper cylinder cover and the lower cylinder cover are also used to prop up the crank shaft. The upper cylinder cover is disposed between the motor and the cylinder and the upper cylinder cover including a through-hole used for holding the crankshaft.

The upper cylinder cover includes a first side facing the motor and a second side facing the cylinder. An inner wall of the housing is laser welded with an outer periphery of the first side and / or an outer periphery of the second side of the upper cylinder cover. An angle between an axis of each of welding spots and the inner wall of the housing is in a range of 0 ° to 45 °.

In one embodiment of the present disclosure, a method of assembling a compressor, wherein, the method comprises steps of providing a housing and an upper cylinder cover and welding, by a laser transmitter, an inner wall of the housing with an outer periphery of a first side of the upper cylinder cover and / or an outer periphery of a second side of the upper cylinder cover. An angle between an axis of the laser transmitter and the inner wall of the housing is in a range of 0 ° to 45 °.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a cross-sectional view of a compressor of the present disclosure;
FIG. 2 is a schematic view of welding of an upper cylinder cover and an inner wall of a housing in a compressor of a first embodiment of the present disclosure;
FIG. 3 is an enlarged view of M region of FIG. 2;
FIG. 4 is a schematic view of FIG. 2 along an A direction;
FIG. 5 is a schematic view of FIG. 2 along a B direction;
FIG. 6 is a schematic view of welding of an upper cylinder cover and an inner wall of a housing in a compressor of a second embodiment of the present disclosure which is not covered by the claims;
FIG. 7 is a schematic view of FIG. 6 along a C direction;
FIG. 8 is a schematic view of welding of an upper cylinder cover and an inner wall of a housing in a compressor of a third embodiment of the present disclosure which is not covered by the claims; and
FIG. 9 is a schematic view of FIG. 8 along a D direction.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

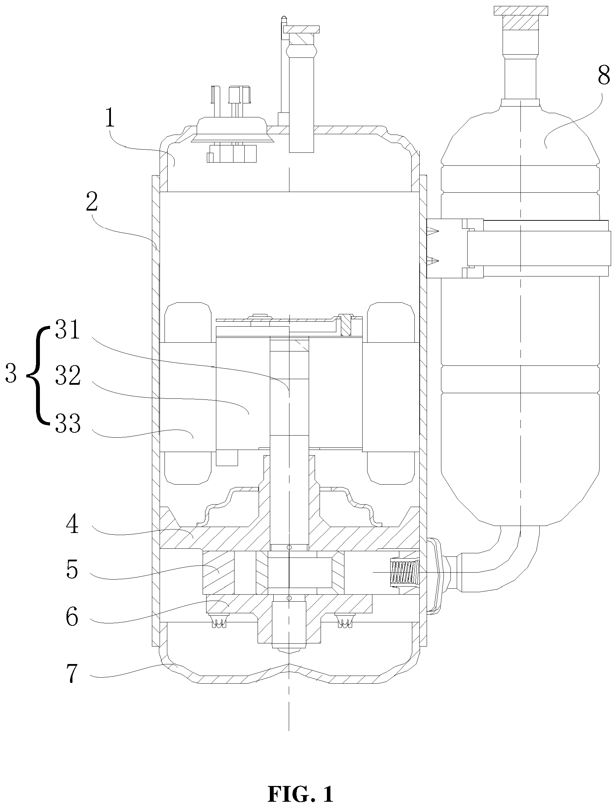

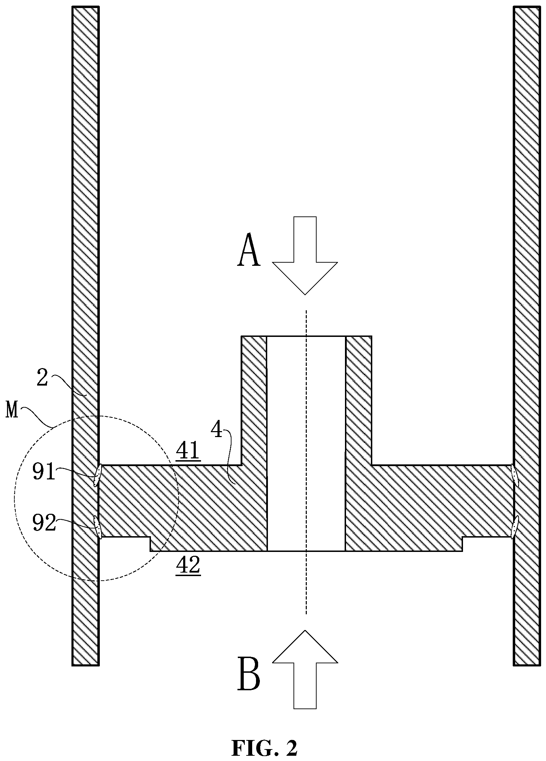

FIG. 1 is a cross-sectional view of a compressor of the present disclosure. FIG. 2 is a schematic view of welding of an upper cylinder cover and an inner wall of a housing in a compressor of a first embodiment of the present disclosure. As shown in FIGS.1 and 2, the compressor of the present disclosure includes a cover 1, a housing 2, a motor 3, an upper cylinder cover 4, a cylinder 5, a lower cylinder cover 6, a lower cover 7 and a liquid container 8. The motor 3 and the cylinder 5 are disposed in the housing 2. The motor 3 includes an inner rotor 32 and an outer stator 33. A crankshaft 31 is used to transmit rotation force of the motor 3 to pistons of the cylinder 5 for compressing refrigerant. A compressing space is formed by an upper cylinder cover 4, a lower cylinder 6 and the cylinder 5. The upper cylinder cover and the lower cylinder cover are also used to prop up the crankshaft 31. The upper cylinder cover 4 is located between the motor 3 and the cylinder 5.

The upper cove 1 and the lower cover 7 are respectively cover two ends of the housing 2. The liquid container 8 is connected to the cylinder 5 to provide refrigerant to the cylinder 5. The upper cylinder cover 4 includes a through-hole for used for holding the crankshaft 31. The upper cylinder cover 4 includes a first side 41 facing the motor 3 and a second side 42 facing the cylinder 5. An inner wall of the housing 2 is laser welded with an outer periphery of the first side 41 and an outer periphery of the second side 42 of the upper cylinder cover 4. An angle between an axis of each of welding spots and the inner wall of the housing 2 is in a range of 0 ° to 45 °.

The material of the upper cylinder cover 4 includes gray iron and the material of the housing 2 includes carbon steel. The upper cylinder, including gray iron material, is laser welded, along two directions, with the housing, including carbon steel material. A welding depth of the present disclosure indicates a distance between the deepest position of the melting part of the base metal and the surface of the base metal.

In one embodiment of the present disclosure, an angle between the axis of the welding spot and the housing 2 is in a range of 15 ° to 30 °.

In one embodiment of the present disclosure, the outer periphery of the first side 41 and the outer periphery of the second side 42 of the upper cylinder cover 4 are respectively laser welded, with the inner wall of the housing 2. In some embodiments, the outer periphery is fully welded with the inner wall of the housing 2. In some embodiments, the outer periphery is welded with the inner wall of the housing 2 with two weld seams or a plurality of weld seam. The weld seams are distributed on the outer periphery.

In some embodiments, the weld seams are asymmetrically distributed on the outer periphery.

In some embodiments, the welding depth of the welding spot is greater than 1.5 mm but is not limited herein. When the welding depth of the welding spot is greater than 1.5 mm, the requirements of strength and rigidity are then meet. Therefore, the more the depth is, the better the rigidity of the connector is.

In some embodiments, the outer periphery of the first side 41 and the outer periphery of the second side 42 of the upper cylinder cover 4 are respectively laser welded, by multi-point distributed laser welding, with the inner wall of the housing 2. The welding depth, in this embodiment, of the welding spot between the outer periphery of the first side 41 of the upper cylinder cover 4 and the inner wall of the housing 2 is equal to the welding spot between the outer periphery of the second side 42 of the upper cylinder cover 4 and the inner wall of the housing 2. Under the premise of the equal welding depth, the effect is the best when two sides, upper side and lower side, are welding all. The connection strength between the upper cylinder cover 4 and the inner wall of the housing 2 is then ensured.

The outer periphery of the upper cylinder cover 4 is slight interference fit with the inner wall of the housing 2 or the outer periphery of the upper cylinder cover 4 is clearance fit with the inner wall of the housing 2. A unilateral side of the slight interference fit is smaller than 0.5mm and wherein a unilateral side of the clearance fit is greater than -0.5mm but is not limited herein. The welding spots are axis symmetrically distributed on the outer periphery of the upper cylinder cover 4 but is not limited herein.

In some embodiments, the chamfered side of the end face of the upper cylinder cover is smaller than 0.5mm.

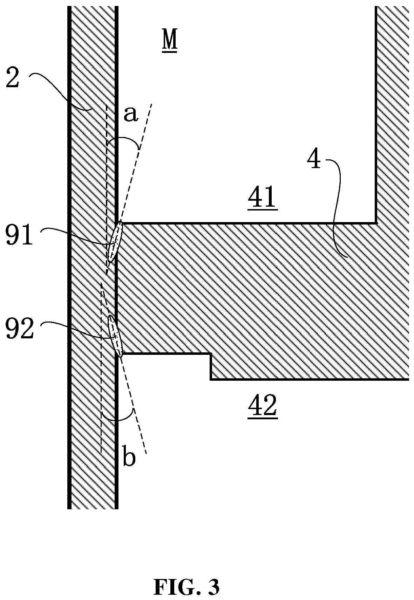

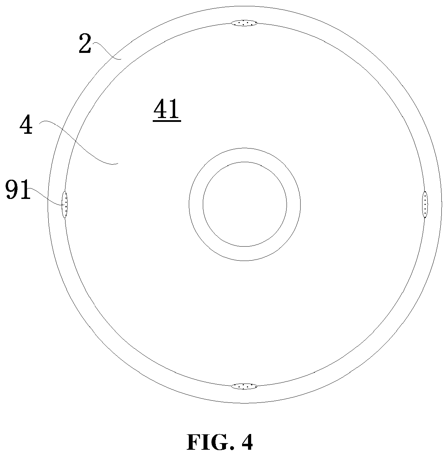

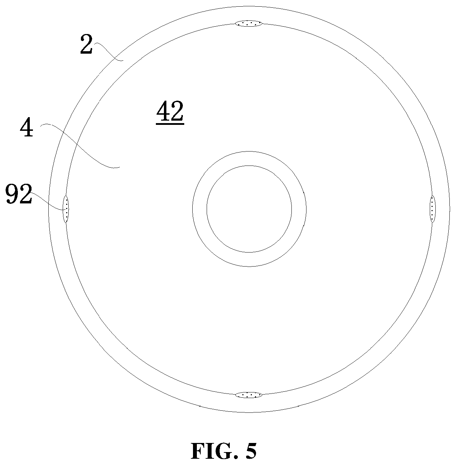

FIG. 3 is an enlarged view of M region of FIG. 2. FIG. 4 is a schematic view of FIG. 2 along an A direction. FIG. 5 is a schematic view of FIG. 2 along a B direction. As shown in FIGS. 2 to 5, in this embodiment, a plurality of welded spots 91 are formed, by laser welding, between the outer periphery of the first side 41 of the upper cylinder 4 and the inner wall of the housing 2. An angle "a" is formed between the welding spot 91 and the inner wall. The angle "a" is in a range of 0 ° to 45 °. In some embodiments, the angle "a" is in a range of 15 ° to 30 °. Similarly, a plurality of welded spots 92 are formed, by laser welding, between the outer periphery of the second side 42 of the upper cylinder 4 and the inner wall of the housing 2. An angle "b" is formed between the welding spot 91 and the inner wall. The angle "b" is in a range of 0 ° to 45 °. In some embodiments, the angle "b" is in a range of 15 ° to 30 °.

As shown in FIGS. 1 to 5, the present disclosure further discloses a method of assembling a compressor. In this embodiment, a housing and an upper cylinder cover are provided. An inner wall of the housing is welded, by a laser transmitter, with an outer periphery of a first side of the upper cylinder cover and / or an outer periphery of a second side of the upper cylinder cover. An angle between an axis of the laser transmitter and the inner wall of the housing is in a range of 0 ° to 45 °.

After the upper cylinder cover and the housing are welded, a connector is then fine finished. The deformation caused by welding is reduced and the assembling accuracy is then improved. Therefore, the air gap of the stator and rotor is even for reducing the noise and improving performance. The assembling method further includes other regular assembling steps, e.g. pump assembling, mainly including crankshaft, piston, cylinder, upper and lower cylinder covers, vanes, and will not repeated herein.

In one embodiment of the present disclosure, an angle between the axis of the laser transmitter and the housing 2 is in a range of 15 ° to 30 °.

In one embodiment of the present disclosure, the welding depth of the welding spot is greater than 1.5 mm.

In one embodiment of the present disclosure, the outer periphery of the first side and the outer periphery of the second side of the upper cylinder cover are respectively laser welded by two laser transmitters, by multi-point distributed laser welding, with the inner wall of the housing. The welding depth, in this embodiment, of the welding spot of the outer periphery of the first side of the upper cylinder cover and the inner wall of the housing is equal to the welding spot of the outer periphery of the second side of the upper cylinder cover and the inner wall of the housing.

In one embodiment of the present disclosure, the material of the upper cylinder cover includes gray iron and the material of the housing includes carbon steel. During the welding process, since gray iron includes a higher carbon content than carbon steel, the power of the laser welding is mainly applied on the housing who includes carbon steel with lower carbon content. An angle between an axis of the laser transmitter and the inner wall of the housing is in a range of 0 ° to 45 °.

In one embodiment of the present disclosure, the outer periphery of the upper cylinder cover is slight interference fit with the inner wall of the housing or the outer periphery of the upper cylinder cover is clearance fit with the inner wall of the housing. A unilateral side of the slight interference fit is smaller than 0.5mm and wherein a unilateral side of the clearance fit is greater than -0.5mm.

In one embodiment of the present disclosure, the welding spots are axis symmetrically distributed on the outer periphery of the upper cylinder cover.

In one embodiment of the present disclosure, the welding spots are asymmetrically distributed on the outer periphery.

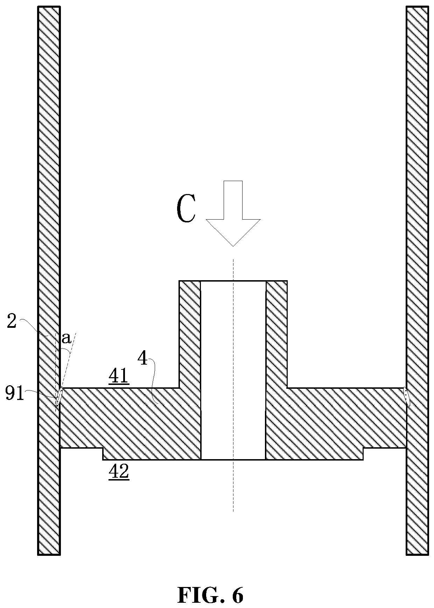

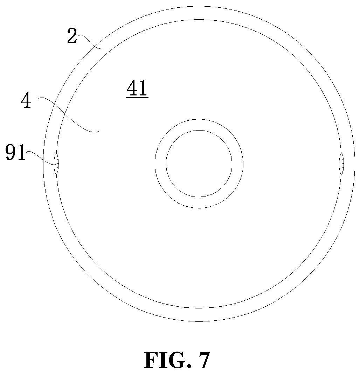

FIG. 6 is a schematic view of welding of an upper cylinder cover and an inner wall of a housing in a compressor of a second embodiment of the present disclosure which is not covered by the claims. FIG. 7 is a schematic view of FIG. 6 along a C direction. As shown in FIGS. 6 and 7, the second embodiment of the present disclosure is a modification of the first embodiment. The inner wall of the housing 2 of the second embodiment is welded, two welding spots, with the outer periphery of the first side 41 of the upper cylinder cover 4. The welding spots 91 are axis symmetrically distributed on the outer periphery of the upper cylinder cover. An angle "a" of the axis of the welding spot 91 and the inner wall of the housing 2 is in a range of 0 ° to 45 °. The second side 42 of the upper cylinder 4 is not necessary to be welded with the inner wall of the housing 2. In the second embodiment, the laser transmitter is not needed which will reduce the assembling cost and time.

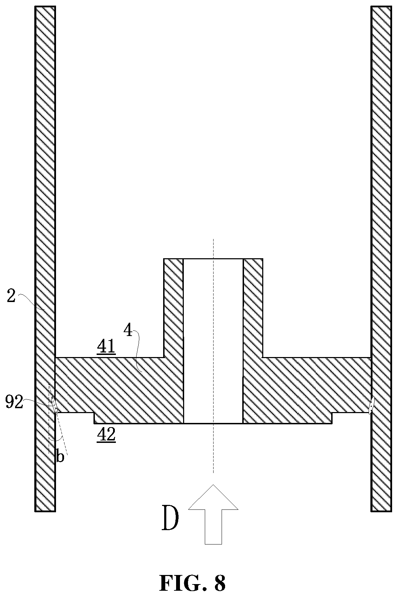

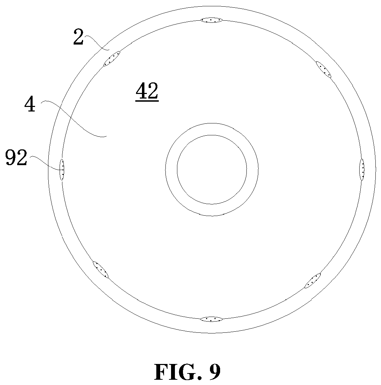

FIG. 8 is a schematic view of welding of an upper cylinder cover and an inner wall of a housing in a compressor of a third embodiment of the present disclosure which is not covered by the claims. FIG. 9 is a schematic view of FIG. 8 along a D direction. As shown in FIGS. 8 and 9, the third embodiment of the present disclosure is a modification of the first embodiment. The inner wall of the housing 2 of the third embodiment is welded, a plurality of welding spots, with the outer periphery of the second side 42 of the upper cylinder cover 4. An angle "b" of the axis of the welding spot 92 and the inner wall of the housing 2 is in a range of 0 ° to 45 °. The first side 41 of the upper cylinder 4 is not necessary to be welded with the inner wall of the housing 2. In the third embodiment, the laser transmitter is not needed which will reduce the assembling cost and time.

In conclusion, the compressor and the method of assembling thereof will improve the assembling accuracy without deformation caused by welding. Therefore, the air gap of the stator and rotor is even for reducing the noise and improving performance.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A compressor, comprising:
a housing (2);
a motor (3) and a cylinder (5) disposed in the housing;
a crankshaft (31) used to transmit rotation force of the motor (3) to pistons of the cylinder (5) for compressing refrigerant;
a compressing space formed by an upper cylinder cover (4), a lower cylinder cover (6) and the cylinder (5), and the upper cylinder cover (4) and the lower cylinder cover (6) are also used to prop up the crank shaft;
wherein the upper cylinder cover (4) is disposed between the motor (3) and the cylinder (5) and the upper cylinder cover (4) including a through-hole used for holding the crankshaft (31);
wherein the upper cylinder cover (4) includes a first side (41) facing the motor (3) and a second side (42) facing the cylinder (5);
**characterized in that**,
an inner wall of the housing (2) is laser welded with an outer periphery of the first side (41) and an outer periphery of the second side (42) of the upper cylinder cover (4); and
wherein the outer periphery of the first side (41) and the outer periphery of the second side (42) of the upper cylinder cover (4) are respectively laser welded, by multi-point distributed laser welding, with the inner wall of the housing (2);
wherein a welding depth of a welding spot (91) of the outer periphery of the first side (41) of the upper cylinder cover (4) and the inner wall of the housing (2) is equal to a welding depth of a welding spot (92) of the outer periphery of the second side (42) of the upper cylinder cover (4) and the inner wall of the housing (2).

2. The compressor of claim 1, wherein a welding depth of the welding spot (91, 92) is greater than 1.5mm.

3. The compressor of claim 1, wherein the material of the upper cylinder cover (4) includes gray iron and the material of the housing (2) includes carbon steel.

4. The compressor of claim 1, wherein the outer periphery of the upper cylinder cover (4) is slight interference fit with the inner wall of the housing (2) or the outer periphery of the upper cylinder cover (4) is clearance fit with the inner wall of the housing (2);
wherein a unilateral side of the slight interference fit is smaller than 0.5mm and wherein a unilateral side of the clearance fit is greater than -0.5mm.

5. The compressor of claim 1, wherein the welding spots are axis symmetrically distributed on the outer periphery of the upper cylinder cover (4).

6. A method of assembling a compressor, the method comprising steps of:
providing a housing and an upper cylinder cover;
**characterized in that**, the method further comprises steps of:
welding, by a laser transmitter, an inner wall of the housing with an outer periphery of a first side of the upper cylinder cover and an outer periphery of a second side of the upper cylinder cover;
wherein an angle between an axis of the laser transmitter and an axis of the inner wall of the housing is in a range of 15 ° to 30 °;
wherein the outer periphery of the first side and the outer periphery of the second side of the upper cylinder cover are respectively laser welded by two laser transmitters, by multi-point distributed laser welding, with the inner wall of the housing;
wherein a welding depth of a welding spot of the outer periphery of the first side of the upper cylinder cover and the inner wall of the housing is equal to a welding depth of a welding spot of the outer periphery of the second side of the upper cylinder cover and the inner wall of the housing.

7. The method of claim 6, wherein a welding depth of the welding spot is greater than 1.5mm.

## Patentansprüche

1. Ein Verdichter, der Folgendes umfasst:
ein Gehäuse (2),
einen Motor (3) und einen Zylinder (5), angeordnet in dem Gehäuse,
eine Kurbelwelle (31), die verwendet wird, um die Rotationskraft des Motors (3) auf Kolben des Zylinders (5) zu übertragen, um Kühlmittel zu komprimieren,
einen Kompressionsraum, bestehend aus einem oberen Zylinderdeckel (4), einen unteren Zylinderdeckel (6) und den Zylinder (5); der obere Zylinderdeckel (4) und der untere Zylinderdeckel (6) werden auch genutzt, um die Kurbelwelle abzustützen;
wobei der obere Zylinderdeckel (4) zwischen dem Motor (3) und dem Zylinder (5) angeordnet ist und der obere Zylinderdeckel (4) ein Durchgangsloch einschließt, das zum Halten der Kurbelwelle (31) verwendet wird;
wobei der obere Zylinderdeckel (4) eine erste dem Motor (3) zugewandte Seite (41) und eine zweite dem Zylinder (5) zugewandte Seite (42) einschließt;
**dadurch gekennzeichnet, dass**
eine Innenwand des Gehäuses (2) mit einer äußeren Peripherie der ersten Seite (41) und einer äußeren Peripherie der zweiten Seite (42) des oberen Zylinderdeckels (4) laserverschweißt ist, und
wobei die äußere Peripherie der ersten Seite (41) und die äußere Peripherie der zweiten Seite (42) des oberen Zylinderdeckels (4) jeweils durch verteiltes Mehrpunkt-Laserschweißen mit der Innenwand des Gehäuses (2) laserverschweißt sind;
wobei eine Schweißtiefe eines Schweißpunkts (91) der äußeren Peripherie der ersten Seite (41) des oberen Zylinderdeckels (4) und der Innenwand des Gehäuses (2) gleich einer Schweißtiefe eines Schweißpunkts (92) der äußeren Peripherie der zweiten Seite (42) des oberen Zylinderdeckels (4) und der Innenwand des Gehäuses (2) ist.

2. Der Verdichter gemäß Anspruch 1, wobei eine Schweißtiefe des Schweißpunkts (91, 92) größer ist als 1,5 mm.

3. Der Verdichter gemäß Anspruch 1, wobei das Material des oberen Zylinderdeckels (4) Grauguss einschließt und das Material des Gehäuses (2) Kohlenstoffstahl einschließt.

4. Der Verdichter gemäß Anspruch 1, wobei die äußere Peripherie des oberen Zylinderdeckels (4) einen leichten Presssitz mit der Innenwand des Gehäuses (2) hat oder die äußere Peripherie des oberen Zylinderdeckels (4) eine Spielpassung mit der Innenwand des Gehäuses (2) hat; wobei eine unilaterale Seite des leichten Presssitzes kürzer ist als 0,5 mm und eine unilaterale Seite der Spielpassung länger ist als -0,5 mm.

5. Der Verdichter gemäß Anspruch 1, wobei die Schweißpunkte axialsymmetrisch auf der äußeren Peripherie des oberen Zylinderdeckels (4) verteilt sind.

6. Ein Verfahren zum Zusammenbau eines Verdichters, das folgende Schritte umfasst:
das Bereitstellen eines Gehäuses und eines oberen Zylinderdeckels;
**dadurch gekennzeichnet, dass** das Verfahren weiter folgende Schritte umfasst:
das Verschweißen, mit einem Lasersender, einer Innenwand des Gehäuses mit einer äußeren Peripherie einer ersten Seite des oberen Zylinderdeckels und einer äußeren Peripherie einer zweiten Seite des oberen Zylinderdeckels;
wobei ein Winkel zwischen einer Achse des Lasersenders und einer Achse der Innenwand des Gehäuses in einem Bereich von 15° bis 30° liegt;
wobei die äußere Peripherie der ersten Seite und die äußere Peripherie der zweiten Seite des oberen Zylinderdeckels mit zwei Lasersendern jeweils durch verteiltes Mehrpunkt-Laserschweißen mit der Innenwand des Gehäuses laserverschweißt werden;
wobei eine Schweißtiefe eines Schweißpunkts der äußeren Peripherie der ersten Seite des oberen Zylinderdeckels und der Innenwand des Gehäuses gleich einer Schweißtiefe eines Schweißpunkts der äußeren Peripherie der zweiten Seite des oberen Zylinderdeckels und der Innenwand des Gehäuses ist.

7. Das Verfahren gemäß Anspruch 6, wobei eine Schweißtiefe des Schweißpunkts größer ist als 1,5 mm.

## Revendications

1. Compresseur, comprenant :
un carter (2) ;
un moteur (3) et un cylindre (5) disposés dans le carter ;
un vilebrequin (31) utilisé pour transmettre une force de rotation du moteur (3) à des pistons du cylindre (5) pour comprimer un fluide frigorigène ;
un espace de compression formé par une culasse supérieure (4), une culasse inférieure (6) et le cylindre (5), la culasse supérieure (4) et la culasse inférieure (6) étant également utilisées pour soutenir le vilebrequin ;
dans lequel la culasse supérieure (4) est disposée entre le moteur (3) et le cylindre (5) et la culasse supérieure (4) inclut un trou traversant utilisé pour tenir le vilebrequin (31) ;
dans lequel la culasse supérieure (4) inclut un premier côté (41) faisant face au moteur (3) et un second côté (42) faisant face au cylindre (5) ;
**caractérisé en ce que**
une paroi interne du carter (2) est soudée au laser à une périphérie externe du premier côté (41) et à une périphérie externe du second côté (42) de la culasse supérieure (4) ; et
dans lequel la périphérie externe du premier côté (41) et la périphérie externe du second côté (42) de la culasse supérieure (4) sont respectivement soudées au laser, par soudage au laser réparti multipoint, à la paroi interne du carter (2) ;
dans lequel une profondeur de soudage d'un point de soudure (91) de la périphérie externe du premier côté (41) de la culasse supérieure (4) et de la paroi interne du carter (2) est égale à une profondeur de soudage d'un point de soudure (92) de la périphérie externe du second côté (42) de la culasse supérieure (4) et de la paroi interne du carter (2).

2. Compresseur selon la revendication 1, dans lequel une profondeur de soudage du point de soudure (91, 92) est supérieure à 1,5 mm.

3. Compresseur selon la revendication 1, dans lequel le matériau de la culasse supérieure (4) inclut de la fonte grise et le matériau du carter (2) inclut de l'acier au carbone.

4. Compresseur selon la revendication 1, dans lequel la périphérie externe de la culasse supérieure (4) est en ajustement légèrement serré avec la paroi interne du carter (2) ou la périphérie externe de la culasse supérieure (4) est en ajustement avec jeu avec la paroi interne du carter (2) ;
dans lequel un côté unilatéral de l'ajustement légèrement serré est inférieur à 0,5 mm et dans lequel un côté unilatéral de l'ajustement avec jeu est supérieur à -0,5 mm.

5. Compresseur selon la revendication 1, dans lequel les points de soudure sont répartis symétriquement par rapport à un axe sur la périphérie externe de la culasse supérieure (4).

6. Procédé d'assemblage d'un compresseur, le procédé comprenant les étapes consistant à :
prendre un carter et une culasse supérieure ;
**caractérisé en ce que** le procédé comprend en outre les étapes consistant à :
souder, par un émetteur laser, une paroi interne du carter à une périphérie externe d'un premier côté de la culasse supérieure et à une périphérie externe d'un second côté de la culasse supérieure ;
dans lequel un angle entre un axe de l'émetteur laser et un axe de la paroi interne du carter est compris dans un intervalle de 15° à 30° ;
dans lequel la périphérie externe du premier côté et la périphérie externe du second côté de la culasse supérieure sont respectivement soudées au laser par deux émetteurs laser, par soudage au laser réparti multipoint, à la paroi interne du carter ;
dans lequel une profondeur de soudage d'un point de soudure de la périphérie externe du premier côté de la culasse supérieure et de la paroi interne du carter est égale à une profondeur de soudage d'un point de soudure de la périphérie externe du second côté de la culasse supérieure et de la paroi interne du carter.

7. Procédé selon la revendication 6, dans lequel une profondeur de soudage du point de soudure est supérieure à 1,5 mm.
